# FASCICULE DE BREVET EUROPEEN

(11) **EP 1 817 519 B1**
(45) Date de publication et mention de la délivrance du brevet: **26.12.2012**
(21) Numéro de dépôt: 05818249.4
(22) Date de dépôt: 18.11.2005
(51) Int. Cl.: F02M 35/10, F16L 11/11, F16L 11/118, F16L 11/12

(54) **CONDUIT D'ADMISSION D'AIR**
LUFTEINLASSLEITUNG
AIR INTAKE CONDUIT

(30) Priorité: 01.12.2004 FR 0412731
(43) Date de publication de la demande: 15.08.2007
(73) Titulaire: Avon Polymeres France SAS, 56000 Vannes (FR)
(72) Inventeur: ROBINAULT, Michel, F-56860 Sene (FR)
(74) Mandataire: Bentz, Jean-Paul
(86) Numéro de dépôt international: PCT/FR2005/002862
(87) Numéro de publication internationale: WO 2006/058978

(56) Documents cités:
- DE-U1- 29 514 123
- US-A- 3 858 615
- US-A- 3 891 007

## Description

La présente invention concerne un conduit en matériau élastomère, notamment un conduit d'admission d'air pour les moteurs atmosphériques ou turbo compressés, essence ou diesel. La présente invention concerne plus particulièrement un conduit d'admission d'air fonctionnant en dépression entre le filtre à air, ou le débitmètre, et le moteur ou le turbo compresseur.

De tels conduits pour alimenter en air le moteur, appelés usuellement conduits d'admission d'air propre, peuvent être réalisés par moulage en matériau élastomère souple, pour des raisons d'acoustique, de découplage des vibrations et des débattements entre le filtre à air et le moteur, ainsi que pour des raisons d'assemblage entre le moteur et le châssis du véhicule. Ces conduits élastomères possèdent généralement des nervures périphériques pour favoriser la résistance au flambement et ainsi éviter un affaissement lors de la mise en dépression.

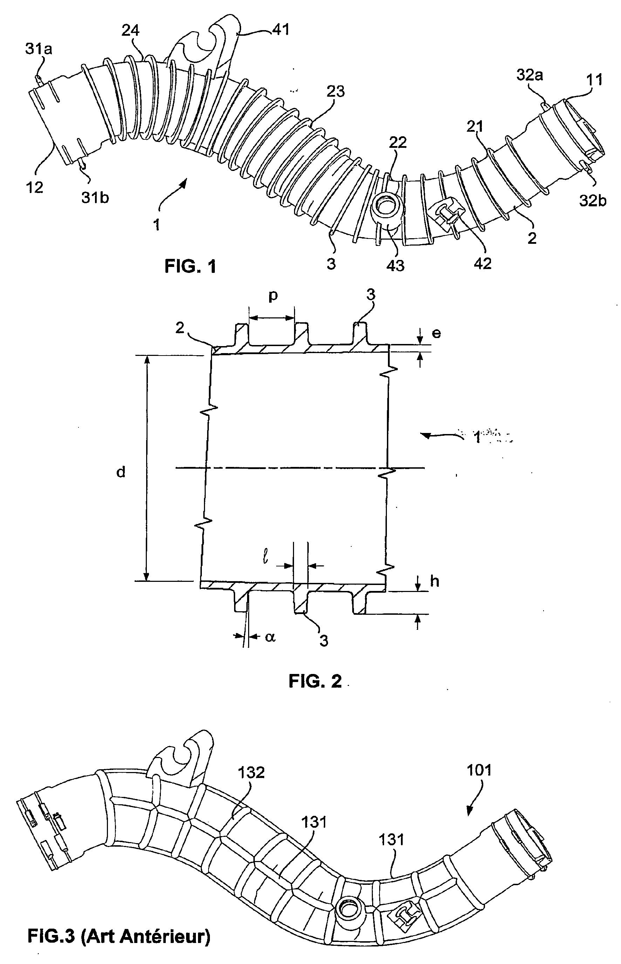

La figure 3 illustre un conduit souple 101 d'admission d'air de ce type, comprenant un maillage de nervures longitudinales 131 et de nervures radiales 132. Les nervures longitudinales et radiales sont réparties de façon quasi standard et de manière empirique sur toute la surface du conduit. La hauteur des nervures est sensiblement égale à l'épaisseur de la paroi tubulaire de conduit appelé également épaisseur de peau. La méthode actuelle de conception des nervures est qu'à partir d'une épaisseur de peau quasi standard et non négligeable, on positionne les nervures d'une hauteur similaire à l'épaisseur de peau et d'un pas relativement important. Les nervures longitudinales, par exemple au nombre de quatre, sont réparties circonférentiellement parallèlement à l'axe principal du conduit, les nervures radiales étant disposées à 90° des nervures longitudinales.

Le but de la présente invention est de proposer un conduit en matériau élastomère, et notamment pour l'admission d'air propre dans un moteur, qui présente un volume de matière réduit et donc un coût réduit en matière première, tout en ayant une tenue en dépression comparable à celle des conduits actuels.

A cet effet, la présente invention a pour objet un conduit en matériau élastomère moulé comprenant une paroi tubulaire munie de nervures annulaires s'étendant radialement vers l'extérieur, caractérisé en ce que:
- l'épaisseur de ladite paroi tubulaire est inférieure à 3,5 millimètres, de préférence comprise entre 1 et 3 millimètres, mieux encore entre 2 et 3 millimètres,
- chaque nervure annulaire présente une largeur inférieure à 4 millimètres, de préférence comprise entre 2 et 4 millimètres, et une hauteur supérieure ou égale à 3,5 millimètres, de préférence comprise entre 3,5 et 10 millimètres, mieux encore comprise entre 2 et 6 millimètres, et
- l'écartement entre deux nervures annulaires successives est inférieur à 25 millimètres, compris entre 10 et 25 millimètres.

Selon l'invention, l'écartement entre les nervures et la largeur des nervures sont réduits, tandis que leur hauteur est augmentée. L'optimisation des paramètres des nervures permet une diminution de l'épaisseur de la paroi tubulaire, tout en maintenant une tenue en dépression comparable à celle des conduits souples moulés de l'art antérieur. Par ailleurs, il a été constaté que les nervures longitudinales n'avaient pas d'influence significative sur la tenue en dépression du conduit et pouvaient de ce fait être supprimées.

L'optimisation de la géométrie du conduit selon l'invention permet de diminuer considérablement les quantités de matière et donc d'optimiser les coûts, tout en préservant les caractéristiques fonctionnelles.

Par rapport à un conduit d'admission d'air classique, tel qu'illustré à la figure 3, l'épaisseur de la paroi tubulaire est réduite de 25 à 50%, l'écartement entre deux nervures annulaires successives est réduit de 30 à 70%, la largeur des nervures annulaires est réduite de 40 à 60% et la hauteur des nervures annulaires est augmentée de 40 à 75%. Le gain de matière peut atteindre 50%, avec des propriétés de résistance au flambement analogues.

La hauteur des nervures et l'épaisseur de la paroi tubulaire peuvent évoluer le long du conduit, la somme des deux pouvant être fixe. Pour un conduit de diamètre interne donné, plus la hauteur des nervures et/ou l'épaisseur de la paroi tubulaire diminuent, plus le pas d'écartement entre les nervures diminue. En pratique, la hauteur des nervures est limitée par des contraintes d'encombrement Dans l'application particulière des conduits d'admission d'air propre, le diamètre interne du conduit est avantageusement compris entre 35 et 90 millimètres.

Selon une particularité, les nervures annulaires présentent une section transversale trapézoïdale, l'angle de dépouille étant compris entre 1° ° et 10°, de préférence entre 1 ° et 5°, par exemple de l'ordre de 2°.

Selon une particularité, le conduit présente une pression limite de flambage d'au moins 100 mbars, et de préférence d'au moins 120 mbars. La géométrie d'un conduit d'admission d'air selon l'invention sera adaptée en fonction de la tenue en dépression requise, la pression limite de flambage du conduit pouvant aller jusqu'à plus de 150 mbars.

Le conduit selon l'invention peut être formé d'un ou plusieurs tronçons, rectilignes et/ou coudés, et présenter toutes formes tridimensionnelles.

L'invention sera mieux comprise, et d'autres buts, détails, caractéristiques et avantages apparaîtront plus clairement au cours de la description explicative détaillée qui va suivre d'un mode de réalisation particulier actuellement préféré de l'invention, en référence au dessin schématique annexé sur lequel :
- la figure 1 représente une vue en perspective d'un conduit d'admission d'air propre selon l'invention ;
- la figure 2 représente une vue agrandie en coupe longitudinale d'une portion rectiligne du conduit de la figure 1, comprenant trois nervures annulaires successives ; et
- la figure 3 est une vue d'un conduit d'admission d'air de l'art antérieur.

Les figures 1 et 2 illustrent un conduit d'admission d'air 1 développé plus particulièrement pour être connecté entre le filtre à air, ou son débitmètre, et le moteur ou le turbo-compresseur.

Ce conduit 1 est formé une paroi tubulaire 2 présentant une surface interne sensiblement lisse, et munie sur sa face extérieure de nervures annulaires 3 s'étendant radialement vers l'extérieur. Le conduit peut comprendre des tronçons coudés et/ou des tronçons rectilignes, son diamètre interne pouvant varier d'un tronçon à l'autre. Dans le présent mode dé réalisation, tel que visible sur la figure 1, le conduit a la forme générale d'un S. Il comprend un premier tronçon rectiligne 21, de petit diamètre interne, définissant une première extrémité 11 du conduit, et relié par un premier tronçon coudé 22 à diamètre interne évolutif, à un deuxième tronçon rectiligne 23, de grand diamètre interne, ce dernier se prolongeant par un deuxième tronçon coudé 24, de même diamètre interne, définissant la deuxième extrémité 12 du conduit.

De manière connue, le conduit comprend à ses extrémités des moyens d'assemblage, pour faciliter son assemblage entre les deux éléments du moteur, tels que deux pattes 31a, 31b diamétralement opposées s'étendant radialement vers l'extérieur. Le conduit peut en outre comprendre des pattes d'assemblage 41, 42, par exemple pour l'assemblage d'autres conduits sur ledit conduit d'admission d'air, et/ou une portion tubulaire 43 s'étendant radialement vers l'extérieur et débouchant sur le passage interne du conduit pour la connexion d'un tuyau, tel qu'un tuyau de récupération d'huile.

Ce conduit nervure est monobloc et est obtenu par moulage, d'un seul tenant, d'un matériau élastomère souple, thermoplastique ou thermodurcissable, garantissant de bonnes propriétés acoustiques et un montage facile entre les deux éléments du moteur. Le conduit peut être réalisé à partir de différents matériaux élastomères, par exemple à partir d'un épichloroprène (ECO), un polychloroprène (CR), un polyéthylène chloré (CM), un terpolymère éthylène-propylène-diène (EPDM), un copolymère butadiène-nitrile acrylique/ polychlorure de vinyle (NBR/PVC), un copolymère éthylène-acrylate de méthyle (EAM) ou des mélanges de ceux-ci.

En référence à la figure 2, qui représente une vue en coupe longitudinale partielle du premier tronçon rectiligne 21 du conduit, on désigne par e l'épaisseur de la paroi tubulaire, ℓ la largeur de la nervure, h la hauteur des nervures annulaires 3 par rapport à la paroi tubulaire, et p l'écartement entre deux nervures annulaires successives, au niveau de leur base, et d le diamètre interne du conduit.

Les nervures présentent une section transversale en forme de trapèze régulier, la largeur ℓ de la nervure définie précédemment étant la largeur de la grande base de la nervure. On désigne par α l'angle de dépouille des nervures annulaires.

Dans le présent mode de réalisation, l'épaisseur e de la paroi tubulaire est identique pour les différents tronçons du conduit, les nervures présentent des largeurs ℓ identiques et des hauteurs h identiques, par contre l'écartement p entre les nervures du premier tronçon rectiligne 21 de petit diamètre est plus important que celui entre les nervures des tronçons de plus grand diamètre 23 et 24.

A titre d'exemple numérique, le diamètre d du premier tronçon rectiligne est de 50 millimètres (mm), et le diamètre interne d du deuxième tronçon rectiligne 23 et du deuxième tronçon coudé 24 est de 63 mm, l'épaisseur e de la paroi du conduit est sensiblement constante, de l'ordre de 2 mm, la largeur ℓ des nervures est de 3,5 mm, leur hauteur h de 6 mm, l'angle de dépouille α de 2°, l'écartement p entre les nervures du premier tronçon rectiligne 21 est de 20 mm et l'écartement entre les nervures du deuxième tronçon rectiligne 23 est de 15 mm. Les nervures annulaires s'étendant radialement vers l'extérieur, l'écartement de deux nervures annulaires successives au niveau des tronçons coudés 22 et 24 n'est pas constant. L'écartement dit moyen entre les nervures du deuxième tronçon coudé 24 est sensiblement égal à l'écartement des nervures du deuxième tronçon rectiligne 23, l'écartement moyen des nervures du premier tronçon diminuant progressivement en direction du deuxième tronçon rectiligne.

Le conduit d'admission présente une déformation de section inférieure à 10 mm, pour une dépression de 100 mbar à une température de fonctionnement de 90°C. La pression limite de flambage, qui est la pression à laquelle le conduit s'affaisse, est de l'ordre de 120 mbars.

En comparaison avec un conduit d'admission d'air classique de l'art antérieur, tel qu'illustré sur la figure 3, présentant une épaisseur de 4 mm, des nervures annulaires de 3,5 mm de hauteur, de 7,5 mm de largeur, un pas de 36 mm entre nervures annulaires, et quatre nervures longitudinales de 3,5 mm de hauteur, le gain de matière est d'environ 30% en volume.

En variante, le diamètre extérieur du conduit, soit (d+2e+2h), reste sensiblement identique sur toute sa longueur, la hauteur des nervures des tronçons de petit diamètre étant plus importante que celle des nervures annulaires des tronçons de grand diamètre. En outre, l'épaisseur du conduit pourra être réduite sur ces tronçons de petit diamètre. Les nervures annulaires peuvent en outre présenter diverses formes, notamment des sections transversales pyramidales ou globalement semi-circulaires.

Bien que l'invention ait été décrite en liaison avec un mode de réalisation particulier, il est bien évident qu'elle n'y est nullement limitée et qu'elle comprend tous les équivalents techniques des moyens décrits ainsi que leurs combinaisons si celles-ci entrent dans le cadre de l'invention.

## Revendications

1. Conduit en matériau élastomère moulé, en particulier pour l'admission d'air dans un moteur, comprenant une paroi tubulaire munie de nervures annulaires s'étendant radialement vers l'extérieur, **caractérisé en ce que**
- l'épaisseur (e) de ladite paroi tubulaire (2) est inférieure à 3,5 millimètres,
- chaque nervure annulaire (3) présente une largeur (ℓ) inférieure à 4 millimètres et une hauteur (h) supérieure ou égale à 3,5 millimètres,
- l'écartement (p) entre deux nervures annulaires successives est inférieur à 25 millimètres, et
- l'écartement (p) entre deux nervures annulaires successives est compris entre 10 et 25 millimètres.

2. Conduit selon la revendication 1, **caractérisé en ce que** l'épaisseur (e) de ladite paroi tubulaire (2) est comprise entre 2 et 3 millimètres.

3. Conduit selon la revendication 1 ou 2, **caractérisé en ce que** chaque nervure annulaire (3) présente une largeur (ℓ) comprise entre 2 et 4 millimètres.

4. Conduit selon l'une des revendications 1 à 3, **caractérisé en ce que** chaque nervure annulaire (3) présente une hauteur (h) comprise entre 3,5 et 10 millimètres.

5. Conduit selon l'une des revendications 1 à 4, **caractérisé en ce qu'**il présente un diamètre interne (d) compris entre 35 et 90 millimètres.

6. Conduit selon l'une des revendications 1 à 5, **caractérisé en ce que** les nervures annulaires (3) présentent une section transversale trapézoïdale, l'angle de dépouille (α) étant compris entre 1° et 10°.

7. Conduit selon l'une des revendications 1 à 6, **caractérisé en ce qu'**il présente une pression limite de flambage d'au moins 100 mbars.

8. Conduit selon l'une des revendications 1 à 7, **caractérisé en ce que** ladite paroi tubulaire (2) du conduit présente une surface interne sensiblement lisse.

9. Conduit d'admission d'air pour l'admission d'air dans un moteur, **caractérisé en ce qu'**il est constitué d'un conduit tel que défini dans l'une des revendications 1 à 8.

## Claims

1. Moulded elastomer conduit, in particular for the air inlet in an engine, comprising a tubular wall equipped with annular ribs, running radially towards the outside, **characterised in that**:
- the thickness (e) of the said tubular wall (2) is less than 3.5 millimetres,
- each annular rib (3) has a width (ℓ) of less than 4 millimetres, and a height (h) greater than or equal to 3.5 millimetres,
- the pitch distance (p) between two successive annular ribs is less than 25 millimetres, and
- the pitch distance (p) between two successive annular ribs is between 10 and 25 millimetres.

2. Conduit of claim 1, **characterised in that** the thickness (e) of the said tubular wall (2) is between 2 and 3 millimetres.

3. Conduit of any of claims 1 or 2, **characterised in that** the annular rib (3) has a width (ℓ) of between 2 and 4 millimetres.

4. Conduit of any of claims 1 to 3, **characterised in that** each annular rib (3) has a height (h) of between 3.5 and 10 millimetres.

5. Conduit of any of claims 1 to 4, **characterised in that** it has an internal diameter (d) of between 35 and 90 millimetres.

6. Conduit of any of claims 1 to 5, **characterised in that** the annular ribs (3) have a trapezoidal cross section, wherein the draught angle (α) is between 1° and 10°.

7. Conduit of any of claims 1 to 6, **characterised in that** it has a buckling limit pressure of at least 100 mbar.

8. Conduit of any of claims 1 to 7, **characterised in that** said tubular wall (2) has a substantially smooth internal surface.

9. Air inlet conduit for air inlet in an engine, **characterized in that** it is constituted by a conduit as defined in one of the claims 1 to 8.

## Patentansprüche

1. Kanal aus geformtem Elastomermaterial, insbesondere zum Ansaugen von Luft in einen Motor, der eine rohrförmige Wand enthält, die mit sich radial nach außen erstreckenden, ringförmigen Rippen versehen ist, **dadurch gekennzeichnet, dass**
- die Dicke (e) der ringförmigen Wand (2) geringer als 3,5 Millimeter ist,
- jede ringförmige Rippe (3) eine Breite (ℓ) geringer als 4 Millimeter und eine Höhe (h) größer als oder gleich 3,5 Millimeter aufweist,
- der Abstand (p) zwischen zwei aufeinanderfolgenden ringförmigen Rippen geringer als 25 Millimeter ist, und
- der Abstand (p) zwischen zwei aufeinanderfolgenden ringförmigen Rippen zwischen 10 und 25 Millimeter liegt.

2. Kanal nach Anspruch 1, **dadurch gekennzeichnet, dass** die Dicke (e) der ringförmigen Wand (2) zwischen 2 und 3 Millimetern liegt.

3. Kanal nach Anspruch 1 oder 2, **dadurch gekennzeichnet, dass** jede ringförmige Rippe (3) eine Breite (ℓ) zwischen 2 und 4 Millimetern aufweist.

4. Kanal nach einem der Ansprüche 1 bis 3, **dadurch gekennzeichnet, dass** jede ringförmige Rippe (3) eine Höhe (h) zwischen 3,5 und 10 Millimetern aufweist.

5. Kanal nach einem der Ansprüche 1 bis 4, **dadurch gekennzeichnet, dass** er einen Innendurchmesser (d) zwischen 35 und 90 Millimetern aufweist.

6. Kanal nach einem der Ansprüche 1 bis 5, **dadurch gekennzeichnet, dass** die ringförmigen Rippen (3) einen trapezförmigen Querschnitt aufweisen, wobei der Freiwinkel (α) zwischen 1° und 10° liegt.

7. Kanal nach einem der Ansprüche 1 bis 6, **dadurch gekennzeichnet, dass** er einen Grenzstauchdruck von mindestens 100 mBar aufweist.

8. Kanal nach einem der Ansprüche 1 bis 7, **dadurch gekennzeichnet, dass** die rohrförmige Wand (2) des Kanals eine im Wesentlichen glatte Innenfläche aufweist.

9. Luftansaugkanal zum Ansaugen von Luft in einen Motor, **dadurch gekennzeichnet, dass** er aus einem Kanal besteht, wie er in einem der Ansprüche 1 bis 8 definiert ist.
